# EUROPEAN PATENT APPLICATION

(11) **EP 3 477 825 A1**
(43) Date of publication of application: **01.05.2019**
(21) Application number: 17815311.0
(22) Date of filing: 16.06.2017
(51) Int. Cl.: H02K 7/06, F16D 65/18, H02K 1/27, H02K 21/24

(54) **ELECTRIC LINEAR ACTUATOR**

(30) Priority: 22.06.2016 JP 2016123138
(71) Applicant: NTN Corporation, Osaka-shi, Osaka 550-0003 (JP)
(72) Inventor: MASUDA, Yui, Iwata-shi Shizuoka 438-8510 (JP)
(74) Representative: Maikowski & Ninnemann Patentanwälte Partnerschaft mbB
(86) International application number: PCT/JP2017/022385
(87) International publication number: WO 2017/221843

(57) **Abstract**

The electric linear motion actuator (1) includes an electric motor (2), a linear motion mechanism (3), and a housing (4). The linear motion mechanism (3) and the electric motor (2) are arranged side by side on the same axis which is an axis of a rotation input-output shaft (5) of the linear motion mechanism (3). The electric motor (2) includes a stator (7) and a rotor (8) which are arranged such that directions of magnetic poles that generate interlinkage flux contributing to torque generation are parallel with a rotation shaft of the electric motor (2). The rotation shaft of the electric motor (2) and the rotation input-output shaft (5) serve as a rotary member (53) formed of a plurality of coupled members. The rotary member (53) is held with respect to the housing (4) by a restricting part (54) that is common to holding in an axial direction and a radial direction of the rotation shaft.

## Description

### CROSS REFERENCE TO THE RELATED APPLICATION

This application is based on and claims Convention priority to Japanese patent application No. 2016-123138, filed June 22, 2016, the entire disclosure of which is herein incorporated by reference as a part of this application.

### BACKGROUND OF THE INVENTION

### (Field of the Invention)

The present invention relates to an electric linear actuator or electric linear motion actuator applicable to an electric brake device, for example.

### (Description of Related Art)

Electric actuators and electric motors are suggested by the following documents:
1. an electric disk brake device in which, on the outer circumference of a linear motion part, an electric motor is arranged coaxially with the linear motion part (Patent Document 1);
2. an electric brake device in which an electric motor is arranged on an axis different from a rotation axis of a linear motion mechanism so as to be parallel with the rotation axis (Patent Document 2); and
3. a double-stator axial gap motor having eight poles and nine slots (Patent Document 3).

### [Related Document]

### [Patent Document]

[Patent Document 1] JP Laid-open Patent Publication No. 2003-247576
[Patent Document 2] JP Laid-open Patent Publication No. 2010-270788
[Patent Document 3] JP Laid-open Patent Publication No. 2008-172884

In general, in an electric brake device using an electric linear motion actuator such as that described in Patent Document 1 and 2, an installation space therefor in a vehicle is extremely limited. The function of the electric brake device needs to be implemented in a space as small as possible. For example, in wheel speed control or the like, which is representatively exemplified as an antilock brake system (abbreviated as ABS), high-speed and high-precision control of a braking force is required for an electric brake.

For example, in a structure in which an electric motor is arranged on the outer circumference of an actuator as in Patent Document 1, the rotor diameter of the electric motor is increased, and thus, the moment of inertia may be increased, resulting in deterioration of the responsiveness and the control accuracy. Meanwhile, instantaneous maximum power consumption to implement a high-speed response may be increased because kinetic energy required to rotate a rotor is proportional to the moment of inertia. Thus, the cost of a power supply device for supplying power thereto may be increased. In addition, for example, as in an electric disk brake device, the temperature of an object, such as a friction pad, to be pressed by an actuator becomes extremely high. In this case, since an electric motor is located near a heat source, the durability may become a problem.

For example, in a case where an electric motor and a linear motion actuator are arranged in parallel with each other as in Patent Document 2, the electric motor and the linear motion actuator generally each have an outer appearance of a cylindrical shape in most cases, and the two cylinders thereof are arranged adjacent to each other. This may generate a certain amount of dead space in a gap therebetween. Further, a coupling mechanism such as a parallel gear is needed between the electric motor and the linear motion actuator, irrespective of required specifications, resulting in a possible increase in the cost. In addition, respective support structures are needed for the electric motor and the linear motion actuator, so that problems relating to space and cost may arise.

As a motor structure for achieving high torque while saving space, an axial gap synchronous motor as disclosed in Patent Document 3 has been known, for example. In general, however, an axial gap motor is likely to generate a large thrust force in the rotation axial direction due to a gap imbalance between a rotor and a stator, an imbalance in a magnetic circuit, or the like. For this reason, a support structure against the thrust force becomes complicated, so that the cost may be increased.

### SUMMARY OF THE INVENTION

An object of the present invention is to provide an electric linear motion actuator in which space saving can be achieved and the cost of which can be reduced by simplification of a support structure against a thrust force.

An electric linear motion actuator according to the present invention includes:
an electric motor;
a linear motion mechanism having a rotation input-output shaft and being configured to convert rotary motion of the electric motor to linear motion of a linear motion part using the rotation input-output shaft; and
a housing holding the linear motion mechanism, wherein
the linear motion mechanism and the electric motor are arranged side by side on the same axis which is an axis of the rotation input-output shaft of the linear motion mechanism,
the electric motor includes a stator and a rotor which are arranged such that directions of magnetic poles that generate interlinkage flux contributing to torque generation are parallel with a rotation shaft of the electric motor, and
the rotation shaft of the electric motor and the rotation input-output shaft serve as a rotary member formed of a single member or of a plurality of coaxially coupled members, and the rotary member is held with respect to the housing by a restricting part that is common to holding in an axial direction and a radial direction of the rotation shaft.

According to this configuration, the electric motor is a so-called axial gap motor including a stator and a rotor which are arranged such that the directions of magnetic poles that generate interlinkage flux contributing to torque generation are parallel with the rotation shaft of the electric motor. Moreover, the linear motion mechanism and the electric motor are arranged side by side on the same axis which is the axis of the rotation input-output shaft of the linear motion mechanism. Therefore, the electric linear actuator can be realized in which space saving can be achieved with little ineffective space and which has a small moment of inertia and high responsiveness, as compared with a structure in which an electric motor and a linear motion actuator are arranged in parallel, for example.

Since the rotation shaft of the electric motor and the rotation input-output shaft serve as a rotary member formed of a single member or of a plurality of coaxially coupled members, a decelerator or speed reducer or reduction gear can be omitted, whereby the structure can be simplified while space saving particularly in the radial direction is achieved. In addition, since the rotary member is held with respect to the housing by the restricting part that is common to holding in the axial direction and the radial direction of the rotation shaft, the support structure against a thrust force can be simplified and the number of components can be reduced. As a result, space saving and cost reduction can be achieved.

The restricting part may be provided in an intermediate position, in the axial direction, between the linear motion part and the electric motor. In this case, the assemblability and the versatility or availability of the linear motion mechanism, etc., can be improved, as compared with a conventional structure in which an electric motor and an actuator are arranged in parallel in the same housing, for example.

The restricting part may have a function of restricting the rotor and the rotation input-output shaft in the axial direction. The restricting part may be provided to the rotation input-output shaft. In this case, the restricting part may include an annular groove formed in an outer circumferential surface of the rotation input-output shaft and a retaining ring fitted in the annular groove, may include a screw portion formed in the outer circumferential surface of the rotation input-output shaft and a nut screwed in the screw portion, or may include a crimping portion formed at an axial end of the rotation input-output shaft. As a result, the support structure against a thrust force can be more reliably simplified.

A relative-rotation inhibiting configuration configured to inhibit the rotor and the rotation input-output shaft from rotating relative to each other in a circumferential direction may be provided. In this case, torque can be transmitted from the rotor to the rotation input-output shaft. Furthermore, the rotor and the rotation input-output shaft can be integrally rotated so that the structure can be further simplified as compared with a conventional structure that has a decelerator interposed between a motor and an actuator, for example. Thus, space saving can be achieved.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal sectional view of an electric linear motion actuator according to one embodiment of the present invention;
Fig. 2 is an enlarged longitudinal sectional view showing an example of restricting a rotor of the electric linear motion actuator in the axial direction;
Fig. 3 is a cross-sectional view taken along line III-III of Fig. 2;
Fig. 4 is a longitudinal sectional view of an electric linear motion actuator according to another embodiment of the present invention;
Fig. 5A is an enlarged longitudinal sectional view showing a modification of the example of restricting the rotor of the electric linear motion actuator in the axial direction according to each of the embodiments of the present invention;
Fig. 5B is an enlarged longitudinal sectional view showing a modification of the example of restricting the rotor of the electric linear motion actuator in the axial direction according to each of the embodiments of the present invention; and
Fig. 6 is a partial longitudinal sectional view of an electric brake device including the electric linear motion actuator according either one of the above-mentioned embodiments.

### DESCRIPTION OF EMBODIMENTS

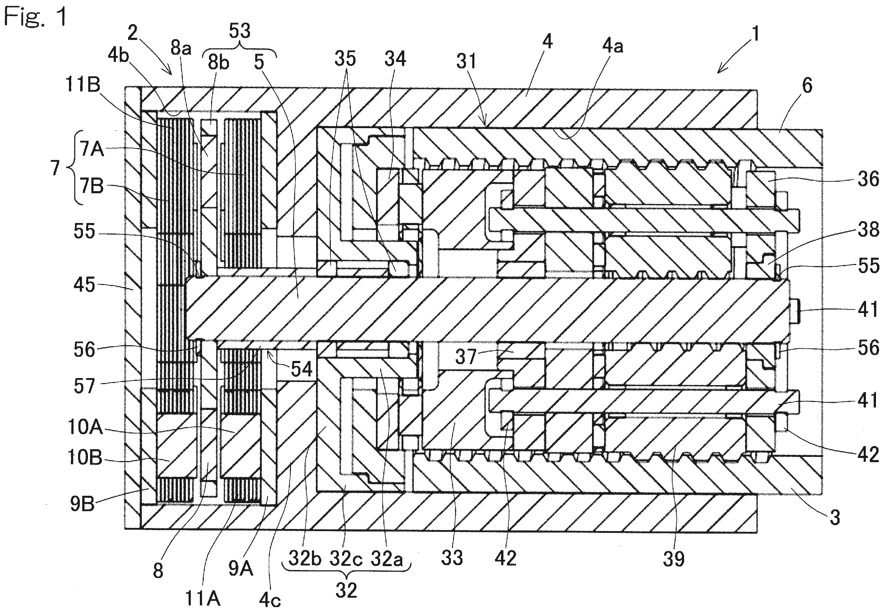

An electric linear motion actuator according to one embodiment of the present application will be described with reference to Fig. 1 to Fig. 3. The electric linear motion actuator is applied to an electric brake device (described later) mounted in a vehicle, for example. As illustrated in Fig. 1, the electric linear motion actuator 1 is an actuator having an electric motor 2 and a linear motion mechanism 3 connected in series in the axial direction. The electric linear motion actuator 1 includes the electric motor 2, the linear motion mechanism 3, and a housing 4. The electric motor 2 of the present embodiment is a double stator type axial gap motor. The linear motion mechanism 3 converts rotary motion of the electric motor 2 to linear motion. The housing 4 holds the linear motion mechanism 3 and the electric motor 2. Illustrations of some components such as wiring are omitted for simplification in Fig. 1.

The electric motor 2 will be described. The electric motor 2 is a so-called axial gap type motor including a stator 7 and a rotor 8 which are arranged such that the directions of magnetic poles that generate interlinkage flux contributing to torque generation are parallel with the rotation shaft of the electric motor 2. The stator 7 is held statically with respect to the housing 4. The rotor 8 is held statically with respect to the rotation input-output shaft 5 of the linear motion mechanism 3, and generates rotational torque by interlinkage flux generated between the rotor 8 and the stator 7 which is arranged so as to have a space therefrom. The rotor 8 is a magnetic field mechanism having torque generating surfaces respectively on both surfaces, in the axial direction, of the rotor 8. The aforementioned term "statically" means the relationship for substantially synchronous motion (in other words, relative restriction), with the influence of a clearance or the like being excluded.

The electric motor 2 is provided inside the cylindrical housing 4. A linear motion mechanism housing portion 4a in which the most part of the linear motion mechanism 3 is housed, a motor housing portion 4b in which the electric motor 2 is housed, and a partition wall 4c separating the linear motion mechanism housing portion 4a and the motor housing portion 4b from each other, are provided in the housing 4. The motor housing portion 4b is provided on one axial end side in the housing 4, and the linear motion mechanism housing portion 4a is provided on the other axial end side in the housing 4.

The partition wall 4c is provided to be perpendicular to the axial direction of the rotation input-output shaft 5, and has formed therein a through hole in which the rotation input-output shaft 5 is inserted from the linear motion mechanism housing portion 4a to the motor housing portion 4b. While the electric motor 2 is housed in the motor housing portion 4b of the housing 4, a motor cover 45 is provided to cover an electric motor 2-side (the one axial end side) opening in the housing 4.

The stator 7 includes a pair of excitation mechanisms 7A, 7B that are arranged so as to respectively face both surfaces, in the axial direction, of the rotor 8. One of the excitation mechanisms 7A, 7B on the partition wall 4c side is defined as the first excitation mechanism 7A, and the other one on the motor cover 45 side is defined as the second excitation mechanism 7B. The first excitation mechanism 7A has magnetic body cores 10A, a back yoke 9A, and coils 11A. The second excitation mechanism 7B has magnetic body cores 10B, a back yoke 9B, and coils 11B.

The first excitation mechanism 7A will be described. In the motor housing portion 4b of the housing 4, the back yoke 9A is provided so as to abut on or contact with the partition wall 4c. The back yoke 9A is arranged on a side opposite to the surface, of the first excitation mechanism 7A, facing the rotor 8. When the back yoke 9A is formed by using a magnetic body such as a steel plate laminate, the torque is improved. Thus, this back yoke 9A is considered to be suitable (the same applies to the back yoke 9B). The magnetic body cores 10A are provided so as to protrude in the axial direction from the back yoke 9A. A plurality of the magnetic body cores 10A are provided at fixed intervals in the circumferential direction. The magnetic body cores 10A are made of laminate steel plates or powder magnetic cores, for example. The coils 11A are wound around the respective magnetic body cores 10A.

The second excitation mechanism 7B will be described. In the motor housing portion 4b of the housing 4, the back yoke 9B is provided so as to abut on the motor cover 45, and the magnetic body cores 10B are provided so as to protrude in the axial direction from the back yoke 9B. Similar to the magnetic body cores 10A, a plurality of the magnetic body cores 10B are also provided at fixed intervals in the circumferential direction. Apart from that, the configuration of the magnetic body cores 10B and the coils 11B are identical to the aforementioned configuration of the magnetic body cores 10A and the coils 11A. When the magnetic body cores 10A and the magnetic body cores 10B made of laminate steel plates, powder magnetic cores, or the like are used, the torque is improved per unit copper loss. Thus, these magnetic body cores 10A and the magnetic body cores 10B are considered to be suitable. However, air core coils which are effective for reduction of the cost of the components and reduction of the torque variation may be used, while no magnetic body is used.

The rotor 8 is a disc-like member having permanent magnets 8a and a holding portion 8b holding the permanent magnets 8a, for example. The holding portion 8b has the rotation shaft of the electric motor 2. The holding portion 8b is made from a non-magnetic material such as resin or stainless steel, for example. The stator 7 is configured as an excitation mechanism including the plurality of coils 11A, 11B, the rotor 8 is configured as a magnetic field mechanism using the permanent magnets 8a, and the electric motor 2 is a permanent-magnet synchronous electric motor, as described above. This configuration is excellent in the durability, the torque density, etc., and is considered to be suitable for an electric linear motion actuator.

The holding portion 8b of the electric motor 2 and the rotation input-output shaft 5 serve as a rotary member 53 formed of a plurality of coaxially coupled members. The rotary member 53 is held with respect to the housing 4 by a restricting part 54 that is common to holding in the axial direction and the radial direction of the rotation shaft.

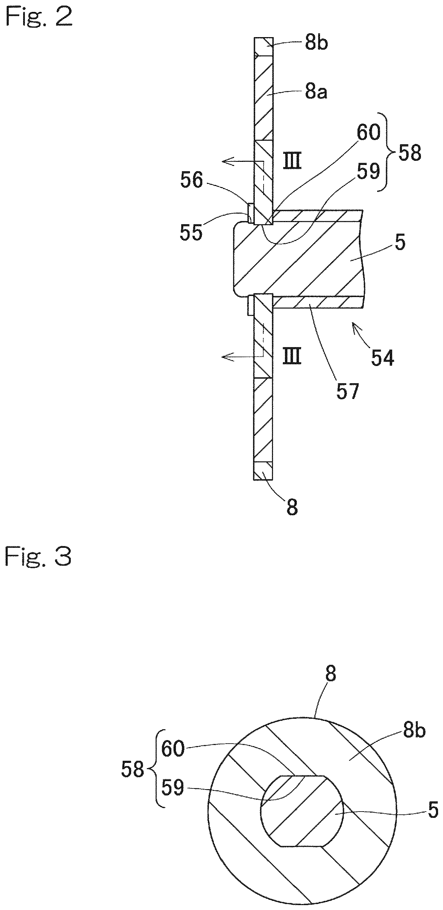

As illustrated in Fig. 2, the restricting part 54 has a function of restricting the rotor 8 and the rotation input-output shaft 5 in the axial direction and the radial direction. The restricting part 54 has annular grooves 55, 55 which are formed at both end portions of the outer circumferential surface of the rotation input-output shaft 5, retaining rings 56, 56 which are fitted in the respective annular grooves 55, a motor spacer 57, radial bearings 35 (Fig. 1), and a bearing case 32 (Fig. 1). Accordingly, the right-side end of the restricting part 54 is a rightmost end of a rightmost one among the motor spacer 57, the radial bearings 35, the bearing case 32, and the like.

An axial gap motor according to the present embodiment is known for its stronger tendency to generate a large thrust force, as compared with a radial gap motor having magnetic poles in the radial direction of the rotation shaft thereof. Regarding a thrust force generated in the rotor 8 of the axial gap motor according to the embodiment, a thrust force generated to one side in the axial direction (left direction in Fig. 1) is transmitted to the linear motion mechanism 3 via the retaining rings 56, 56, and is restricted to the housing 4 by a thrust bearing 34 (described later). In contrast, a thrust force generated to the other side in the axial direction (right direction in Fig. 1) is transmitted as a thrust force of the radial bearings 35, 35 through the motor spacer 57, and is held with respect to the housing 4 through the bearing case 32.

The motor spacer 57 is fitted to the outer circumferential surface of an end portion, of the rotation input-output shaft 5, inserted in the through hole of the partition wall 4c and the motor housing portion 4b. The motor spacer 57 is arranged at a position, in the axial direction, between the retaining ring 56 on the one side in the axial direction and the radial bearing 35 on the left side in Fig. 1, and transmits, to the radial bearing 35, a thrust force generated in the right direction in Fig. 1, as described above. The annular grooves 55, 55, the retaining rings 56, 56, the motor spacer 57, the radial bearings 35, and the bearing case 32 correspond to the "axially" restricting part 54 that restricts the rotary member 53 in the axial direction with respect to the housing 4.

Fig. 3 is a cross-sectional view taken along line III-III of Fig. 2. As illustrated in Fig. 2 and Fig. 3, a relative-rotation inhibiting configuration 58 configured to inhibit the rotor 8 and the rotation input-output shaft 5 from rotating relative to each other in the circumferential direction is provided. The relative-rotation inhibiting configuration 58 has, for example, flat contacting portions 59 which are formed in parallel with each other at positions, on the inner circumferential surface (the inner surface of a hole through which the rotation input-output shaft 5 passes) of the rotor 8, opposed to each other by 180 degrees, and has flat contacted portions 60 which are formed on the outer circumferential surface of the rotation input-output shaft 5 and which are coupled to the flat contacting portions 59. The flat contacting portions 59 and the flat contacted portions 60 are width across flats formed by width across flat cutting, for example.

The configuration of the relative-rotation inhibiting configuration 58 is not limited to width across flats, and may be formed of a flat contacting portion and a flat contacted portion formed by D-cutting, for example. Apart from that, a fitting surface formed by splining or serrating, a threaded surface formed by threading, or the like, may be provided on a surface, of the relative-rotation inhibiting configuration 58, where the rotor 8 and the rotation input-output shaft 5 are coupled together.

The linear motion mechanism 3 will be described. As illustrated in Fig. 1, the most part of the linear motion mechanism 3 is incorporated in the linear motion mechanism housing portion 4a of the housing 4. Upon the output from the electric motor 2, the linear motion mechanism 3 loads a braking force to a brake rotor (described later). The linear motion mechanism 3 has a linear motion part 6, and converts rotary motion of the electric motor 2 to linear motion of the linear motion part 6 via the rotation input-output shaft 5.

The linear motion mechanism 3 has the rotation input-output shaft 5 that is rotationally driven by the electric motor 2, and a conversion mechanism part 31 that converts rotary motion of the rotation input-output shaft 5 to linear motion. The conversion mechanism part 31 has the linear motion part 6, the bearing case 32, a back plate 33 which is an annular thrust plate, the thrust bearing 34 which holds a reaction force to a load caused in the axial direction by the linear motion of the linear motion part 6, the radial bearings 35, a carrier 36, sliding bearings 37, 38, and planetary rollers 39.

The linear motion part 6 having a cylindrical shape is supported by the inner circumferential surface of the linear motion mechanism housing portion 4a, so as to be movable in the axial direction while being inhibited from rotating. Spiral protrusions which protrude radially inward and which are formed into spiral shapes are provided on the inner circumferential surface of the linear motion part 6. A plurality of the planetary rollers 39 mesh with the spiral protrusions.

The bearing case 32 is provided on one axial end side of the linear motion part 6 in the linear motion mechanism housing portion 4a. The bearing case 32 has a cylindrical boss portion 32a, a flange portion 32b extending radially outward from the boss portion 32a, and an outer cylinder portion 32c connected to the outer diameter side end of the flange portion 32b. The outer cylinder portion 32c, the flange portion 32b, and the boss portion 32a are formed integrally with one another. The outer circumferential surface of the outer cylinder portion 32c is fixed to the inner circumferential surface of the linear motion mechanism housing portion 4a by use of shrink fitting or welding, for example. In addition, one axial end surface of the flange portion 32b abuts on the partition wall 4c.

The method for fixing the bearing case 32 to the housing 4 is not limited to the aforementioned shrink fitting or welding. For example, an annular groove (not illustrated) may be provided in the inner circumferential surface of the linear motion mechanism housing portion 4a of the housing 4, and a retaining ring, etc., may be used in the annular groove so that the bearing case 32 is fixed to the housing 4. After the bearing case 32 is fixed to the housing 4, the radial bearings 35 are fitted to the bearing case 32, and further, the rotation input-output shaft 5 is fitted to the radial bearings 35, as described later.

Therefore, the rotary member 53 is held and restricted, with respect to the housing 4, in the radial direction by the radial bearings 35 and the bearing case 32. The radial bearings 35 and the bearing case 32 correspond to the "radially" restricting part 54 that restricts the rotary member 53 with respect to the housing 4 in the radial direction. The "radial bearings 35 and the bearing case 32" which serve as the restricting part 54 that is common to holding in the "axial direction" and the "radial direction" are provided in an intermediate position, in the axial direction, between the linear motion part 6 and the electric motor 2.

A plurality (two in the present embodiment) of the radial bearings 35 are fitted in the boss portion 32a of the bearing case 32. Further, at a position opposite to this fitting position, the rotation input-output shaft 5 is fitted to the radial bearings 35. The rotation input-output shaft 5 is rotatably supported by the bearing case 32 via the plurality of radial bearings 35. Bearings each capable of holding a radial load and an axial load are used as the radial bearings 35. The radial bearings 35 and the thrust bearing 34 provide predetermined restricting forces to the bearing case 32.

In the present embodiment, a needle roller bearing is used as the thrust bearing 34 and slide bearings are used as the radial bearings 35. However, these bearings are not limited to these examples. For example, an arbitrary structure such as a ball bearing, a cylindrical roller bearing, a tapered roller bearing, or a slide bearing can be used as the thrust bearing 34, as appropriate. Bearings, such as flange-equipped slide bearings or ball bearings, each capable of holding a radial load and an axial load, can be used as the radial bearings 35, as appropriate.

The carrier 36 which is rotatable about the rotation input-output shaft 5 is provided on the inner circumference of the linear motion part 6. The carrier 36 is rotatably supported by the rotation input-output shaft 5 through the slide bearings 37, 38 which are fitted between the carrier 36 and the rotation input-output shaft 5. The positions, in the axial direction, of the carrier 36 and the rotation input-output shaft 5 with respect to the bearing case 32 are restricted by the retaining rings 56 at the axial end portion.

To the carrier 36, a plurality of roller shafts 41 are provided spaced apart from each other in the circumferential direction. A plurality of shaft insertion holes are formed in each of opposite ends, in the axial direction, of the carrier 36. Each of the shaft insertion holes is formed as an oblong hole extending in the radial direction by a predetermined distance. Opposite axial ends of each of the roller shafts 41 are inserted in the corresponding shaft insertion holes so that the roller shafts 41 are supported so as to be movable in the radial direction within the ranges of the corresponding shaft insertion holes. An elastic ring 42 which urges the roller shafts 41 radially inward is extended over each of opposite axial ends of the plurality of roller shafts 41.

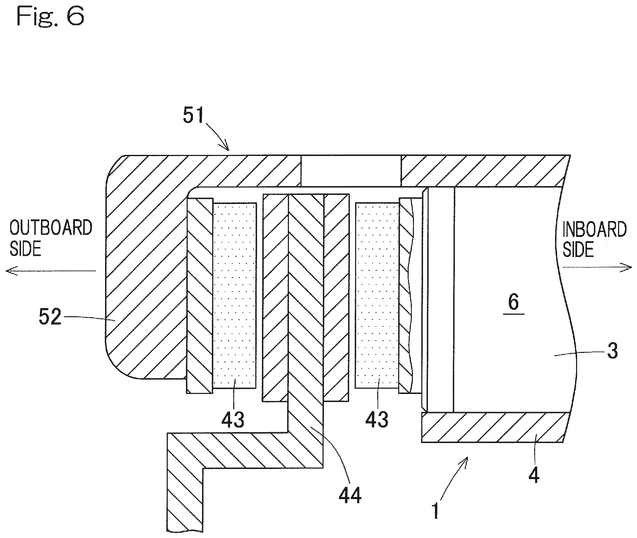

The planetary rollers 39 are rotatably supported by the respective roller shafts 41. Circumferential grooves or spiral grooves which mesh with the spiral protrusions of the linear motion part 6 are formed in the outer circumferential surfaces of the planetary rollers 39. The planetary rollers 39 are interposed between the outer circumferential surface of the rotation input-output shaft 5 and the inner circumferential surface of the linear motion part 6. The planetary rollers 39 are pushed against the outer circumferential surface of the rotation input-output shaft 5 by the urging force of an elastic ring 42. When the rotation input-output shaft 5 is rotated by the electric motor 2, the planetary rollers 39 in contact with the outer circumferential surface of the rotation input-output shaft 5 are rotated by contact friction therebetween. As a result, the linear motion part 6 moves in the axial direction so that friction pads 43 (Fig. 6) provided to an axial end of the linear motion part 6 abut on or separate from a brake rotor 44 (Fig. 6).

According to the electric linear motion actuator 1 described above, the electric motor 2 is a so-called axial gap motor, and moreover, the linear motion mechanism 3 and the electric motor 2 are arranged side by side on the same axis, which is the axis of the rotation input-output shaft 5 of the linear motion mechanism 3. Consequently, the electric linear motion actuator can be realized in which space saving can be achieved with little ineffective space and which has a small moment of inertia and high responsiveness, as compared with a structure, for example, in which an electric motor and a linear motion actuator are arranged in parallel with each other, as in Patent Document 2.

Since the rotary member 53 is formed of a plurality of members coaxially coupled between the holding portion 8b of the electric motor 2 and the rotation input-output shaft 5, a decelerator can be omitted, whereby the structure can be simplified while space saving particularly in the radial direction is achieved. In addition, the rotary member 53 is held with respect to the housing 4 by the "radial bearings 35 and bearing case 32" which serve as the restricting part that is common to holding the rotary member 53 in the axial direction and the radial direction. In other words, the "radial bearings 35 and the bearing case 32" are used as the axially and radially restricting part 54. Therefore, the support structure against a thrust force can be simplified and the number of components can be reduced. As a result, space saving and cost reduction can be achieved.

The radial bearings 35 and the bearing case 32 (a portion of the restricting part 54) are provided in an intermediate position, in the axial direction, between the linear motion part 6 and the electric motor 2. Therefore, the assemblability and the versatility of the linear motion mechanism 3, etc., can be improved, as compared with a conventional structure in which an electric motor and an actuator are arranged in parallel with each other in the same housing, for example.

Since the relative-rotation inhibiting configuration 58 is provided, the torque can be transmitted from the rotor 8 to the rotation input-output shaft 5. Furthermore, the rotor 8 and the rotation input-output shaft 5 can be integrally rotated so that the structure can be further simplified as compared with a conventional structure having a decelerator interposed between a motor and an actuator, for example. Thus, space saving can be achieved.

When the permanent magnets 8a penetrating in the axial direction are used, as illustrated in Fig. 1, the rotor 8 can be mounted while achieving space saving. However, the rotor 8 may have a structure in which a back yoke (not illustrated) made of a magnetic body is arranged in the middle thereof and magnets (not illustrated) are attached to both surfaces, in the axial direction, of the back yoke, for example. In this case, the heat resistance can be improved.

A description of other embodiments is given. In the following description, components corresponding to those having been described in the embodiment are denoted by the same reference numerals, and an overlapping description thereof is omitted. When only a portion of a configuration is described, the other portion of the configuration are identical to that having been described in the prior embodiment, unless otherwise stated. The same configuration provides the same advantageous effect. In addition to combinations of components specifically described in the embodiments, the embodiments may be partially combined as long as any problem is not caused by the combination.

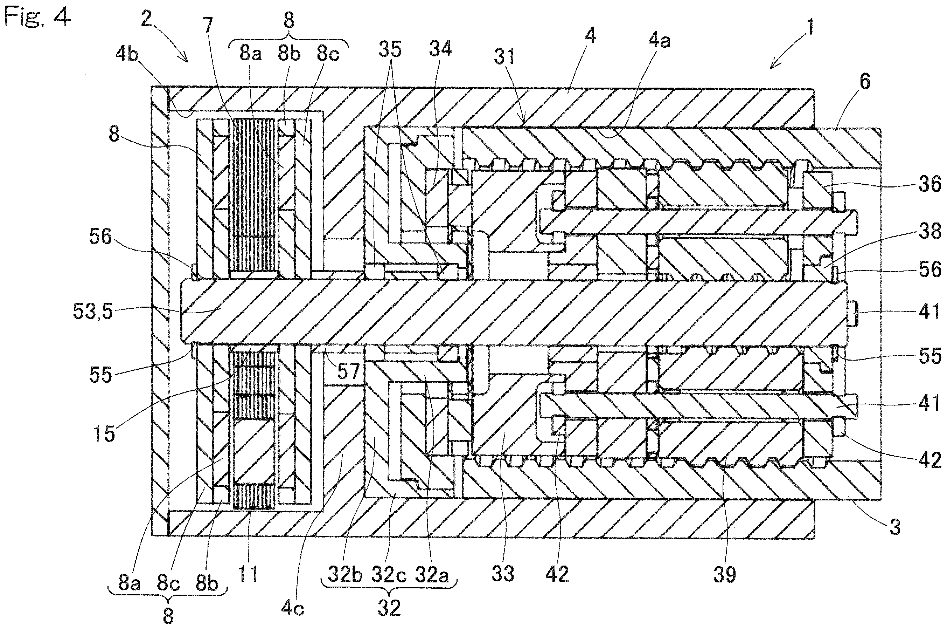

The electric linear motion actuator 1 illustrated in Fig. 4 exemplifies, as the electric motor 2, an axial gap motor having a double rotor structure in which the stator 7 having magnetic poles on the axially both surfaces thereof is arranged at the middle, and the rotors 8, 8 are arranged on both sides of the stator 7. The electric motor 2 includes: the stator 7 having coils 11 which penetrate both surfaces thereof in the rotational axis direction and generates interlinkage flux contributing to torque generation; and the rotors 8, 8 which are disposed on the axially both sides of the stator 7 and which each have an interlinkage flux generation surface as one surface thereof.

Each of the rotors 8 includes the permanent magnets 8a, the holding portion 8b holding the permanent magnets 8a, and a back yoke 8c. Sequentially from an end portion side of the rotation input-output shaft 5, the retaining ring 56, a collar 15, and the motor spacer 57 are provided on the outer circumferential surface of the end portion thereof. One of the rotors 8 is positioned and fixed in the axial direction between the retaining rings 56 and the collar 15. The other rotor 8 is positioned and fixed in the axial direction between the collar 15 and the motor spacer 57. The width of a gap (space) between the stator 7 and each of the rotors 8 is determined by the retaining rings 56, the collar 15, and the motor spacer 57. For example, the stator 7 is arranged inside the motor housing portion 4b so as to abut on the motor housing portion 4b. Apart from that, the same configuration as the aforementioned embodiment is used.

Also in the electric linear motion actuator 1 including the axial gap motor having the double rotor structure described above, space saving can be achieved and the cost can be reduced by simplification of the support structure against a thrust force. When the back yoke 8c is formed by use of a magnetic body, the heat resistance is improved. Thus, this back yoke 8c is considered to be suitable. Apart from that, the same effect as that of the aforementioned embodiment is obtained.

Instead of having the shape penetrating in the axial direction as in Fig. 4, the stator 7 may have a shape in which a back yoke (not illustrated) formed of a magnetic body is arranged in the middle and coils (not illustrated) are attached to both surfaces of the back yoke. When this structure is used, high torque can be achieved while power is relatively saved.

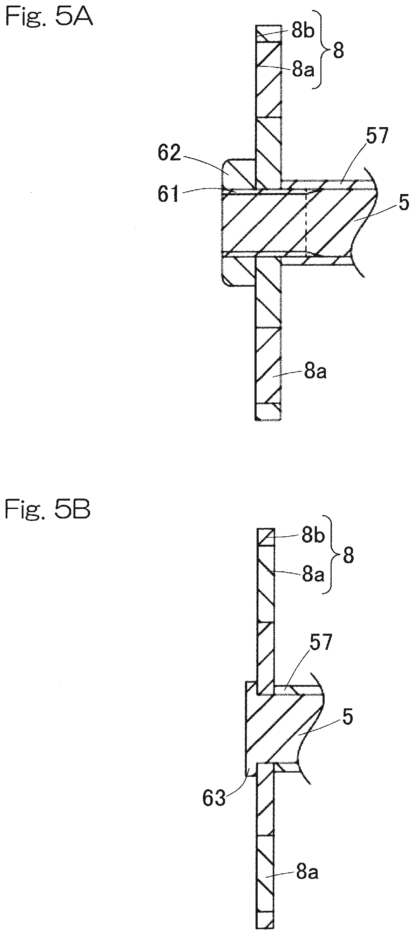

In order to restrict each of the rotors 8 in the rotational axis direction, a screw portion 61 and a nut 62 may be used as illustrated in Fig. 5A, instead of the annular grooves 55 and the retaining rings 56 in Fig 2. The screw portion 61 is formed on the outer circumferential surface of the rotation input-output shaft 5, and the nut 62 is screwed in the screw portion 61. The rotor 8 is axially positioned and then fixed between a seat surface of the nut 62 and the motor spacer 57. In this configuration, the aforementioned inner circumferential surface of the rotor 8 and the outer circumferential surface of the rotation input-output shaft 5 may be threadedly engaged with each other, or may be fitted to each other by fitting other than threaded engagement. When the inner circumferential surface of the rotor 8 and the outer circumferential surface of the rotation input-output shaft 5 are threadedly engaged with each other, a structure using no nut 62 may be implemented.

In order to restrict each of the rotors 8 in the rotational axis direction, a crimping portion 63 may be used as illustrated in Fig. 5B, instead of the annular grooves 55 and the retaining rings 56 in Fig. 2. The crimping portion 63 is formed on an axial end of the rotation input-output shaft 5. The crimping portion 63 is formed by crimping of the axial end of the rotation input-output shaft 5. In this case, the support structure against a through force can be further simplified and the number of components can be further reduced, as compared with the configuration in Fig. 2 or Fig. 5A.

Alternatively, a single type axial gap motor (not illustrated) in which a stator and a rotor each have an interlinkage-magnetic-flux generation surface on only one surface thereof may be configured. When a requested motor torque is relatively small, this configuration is suitable to form an actuator that achieves more space saving.

Fig. 6 is a partial longitudinal sectional view of an electric brake device including the electric linear motion actuator 1 according to either one of the aforementioned embodiments. The electric brake device basically includes the electric linear motion actuator 1 according to either one of the aforementioned embodiments, the brake rotor 44 as a rotary member that rotates integrally with a wheel, and the friction pads (friction materials) 43 that generate a braking force by coming into contact with the brake rotor 44. The electric brake device further includes a control device (not illustrated) that controls the electric linear motion actuator 1. In a vehicle, a caliper 51 is provided so as to surround the outer circumferential side portion of the brake rotor 44. The caliper 51 is provided integrally with the housing 4 of the electric linear motion actuator 1.

A claw portion 52 is provided on an outboard side end of the caliper 51. The claw portion 52 faces, in the axial direction, an outboard side lateral surface of the brake rotor 44. The friction pad 43 on the outboard side is supported by the claw portion 52. The friction pad 43 on the inboard side of the linear motion part 6 of the linear motion mechanism 3 is supported by the outboard side end of the caliper 51. The friction pad 43 faces, in the axial direction, an inboard-side lateral surface of the brake rotor 44. The electric linear motion actuator 1 performs driving to cause the friction pads 43 to abut on or separate from the brake rotor 44.

A mount (not illustrated) is supported by a knuckle (not illustrated) of a vehicle. A pair of pin support pieces (not illustrated) are provided to on opposite ends, in the longitudinal direction, of the mount. A sliding pin (not illustrated) extending in parallel with the axial direction is provided to an end of each of the pin support pieces. The caliper 51 is supported in an axially slidable manner by the sliding pins.

The control device controls rotation of the electric motor of the electric linear motion actuator 1 according to the operation amount of a brake pedal (not illustrated). During braking, driving by the electric linear motion actuator 1 causes the friction pad 43 on the inboard side to abut on the brake rotor 44 and press the brake rotor 44 in the axial direction. The caliper 51 slides toward the inboard side with the reaction force of the pressing force. Accordingly, the friction pad 43, on the outboard side, supported by the claw portion 52 of the caliper 51 comes into contact with the brake rotor 44. The friction pads 43, 43 on the outboard side and the inboard side firmly sandwich or hold the brake rotor 44 from both sides in the axial direction so that a braking force is loaded to the brake rotor 44.

According to this configuration, space saving can be achieved in the electric linear motion actuator 1. Thus, the electric brake device can be installed in a vehicle in which an installation space for the electric linear motion actuator 1 is extremely limited. Consequently, the versatility of the electric brake device can be enhanced so that the electric brake device can be installed in various vehicles. In addition, simplification of the support structure against a thrust force and cost reduction can be achieved in the electric linear motion actuator 1. Thus, the entire cost of the electric brake device can be reduced.

The holding portion 8b of the electric motor 2 and the rotation input-output shaft 5 may constitute a rotary member formed of a single member. In the rotor, when the holding portion made from a nonmagnetic material holds the permanent magnets, the loss is small. Thus, this rotor is considered to be suitable. However, the holding portion made from a magnetic material may hold the permanent magnets. Without using a holding portion, the rotor may have a structure in which a single magnet magnetized with a plurality of magnetic poles in the axial direction is directly fixed to the rotation input-output shaft.

Instead of using the motor spacer, the rotation input-output shaft may be formed into a stepped shape the outer diameter dimension of which varies according to the position in the axial direction. For the electric motor, a DC motor configuration using permanent magnets for a stator and using coils and a brush, etc., for a rotor, may be used. Alternatively, a reluctance motor configuration using a core having a certain shape such that the stator inductance varies with rotation of the rotor, may be used.

As the conversion mechanism part of the linear motion mechanism, various screw mechanisms such as a ball screw, a mechanism using a slope such as a ball ramp, or the like may be adopted other than the planetary rollers. Components, such as a sensor for detecting a motor angle, a thermistor, and wiring parts of electric systems, that are necessary for application of the electric linear motor actuator are provided as appropriate. The electric linear motor actuator according to each of the embodiments is applicable to a press device, for example, in addition to an electric brake device.

The preferred embodiments have been described above with reference to the accompanying drawings. However, various additions, modification, and deletions can be made within the gist of the present invention. Accordingly, such additions, modification, and deletions are also included in the scope of the present invention.

### [Reference Numerals]

- 1 ····: electric linear motion actuator
- 2 ····: electric motor
- 3 ····: linear motion mechanism
- 4 ····: housing
- 5 ····: rotation input-output shaft
- 6 ····: linear motion part
- 7 ····: stator
- 8 ····: rotor
- 53 ····: rotary member
- 54 ····: restricting part
- 55 ····: annular groove
- 56 ····: retaining ring
- 58 ····: relative-rotation inhibiting configuration
- 61 ····: screw portion
- 62 ····: nut
- 63 ····: crimping portion

## Claims

1. An electric linear motion actuator comprising:
an electric motor;
a linear motion mechanism having a rotation input-output shaft and being configured to convert rotary motion of the electric motor to linear motion of a linear motion part using the rotation input-output shaft; and
a housing holding the linear motion mechanism, wherein
the linear motion mechanism and the electric motor are arranged side by side on the same axis which is an axis of the rotation input-output shaft of the linear motion mechanism,
the electric motor includes a stator and a rotor which are arranged such that directions of magnetic poles that generate interlinkage flux contributing to torque generation are parallel with a rotation shaft of the electric motor, and
the rotation shaft of the electric motor and the rotation input-output shaft serve as a rotary member formed of a single member or of a plurality of coaxially coupled members, and the rotary member is held with respect to the housing by a restricting part that is common to holding in an axial direction and a radial direction of the rotation shaft.

2. The electric linear motion actuator as claimed in claim 1, wherein
the restricting part is provided in an intermediate position, in the axial direction, between the linear motion part and the electric motor.

3. The electric linear motion actuator as claimed in claim 1 or 2, wherein
the restricting part has a function of restricting the rotor and the rotation input-output shaft in the axial direction, and the restricting part is provided to the rotation input-output shaft.

4. The electric linear motion actuator as claimed in claim 3, wherein
the restricting part includes an annular groove formed in an outer circumferential surface of the rotation input-output shaft and a retaining ring fitted in the annular groove, includes a screw portion formed in the outer circumferential surface of the rotation input-output shaft and a nut screwed in the screw portion, or includes a crimping portion formed at an axial end of the rotation input-output shaft.

5. The electric linear motion actuator as claimed in any one of claims 1 to 4, further comprising a relative-rotation inhibiting configuration configured to inhibit the rotor and the rotation input-output shaft from rotating relative to each other in a circumferential direction.
